# EUROPÄISCHE PATENTSCHRIFT

(11) **EP 3 181 417 B1**
(45) Veröffentlichungstag und Bekanntmachung des Hinweises auf die Patenterteilung: **06.01.2021**
(21) Anmeldenummer: 16002436.0
(22) Anmeldetag: 16.11.2016
(51) Int. Cl.: B60T 13/26, B60T 17/06

(54) **DRUCKLUFTSYSTEM MIT DRUCKLUFTBEHÄLTER ZUR DRUCKLUFTSPEICHERUNG UND ZUR DRUCKLUFTVERTEILUNG**
COMPRESSED AIR SYSTEM WITH COMPRESSED AIR TANK FOR COMPRESSED AIR STORAGE AND FOR COMPRESSED AIR DISTRIBUTION
SYSTÈME D'AIR COMPRIMÉ COMPRENANT UN RÉSERVOIR D'AIR COMPRIMÉ DESTINÉ AU STOCKAGE ET À LA DISTRIBUTION D'AIR COMPRIMÉ

(30) Priorität: 16.12.2015 DE 102015016297
(43) Veröffentlichungstag der Anmeldung: 21.06.2017
(73) Patentinhaber: MAN Truck & Bus SE, 80995 München (DE)
(72) Erfinder: Berndt, Conrad, 85375 Neufahrn bei Freising (DE)
(74) Vertreter: v. Bezold & Partner Patentanwälte - PartG mbB

(56) Entgegenhaltungen:
- WO-A1-99/43527
- KR-A- 20080 032 571
- US-A1- 2005 168 058

## Beschreibung

Die Erfindung betrifft ein Druckluftsystem für ein Fahrzeug, insbesondere ein Nutzfahrzeug, z. B. einen Omnibus oder einen Lastkraftwagen.

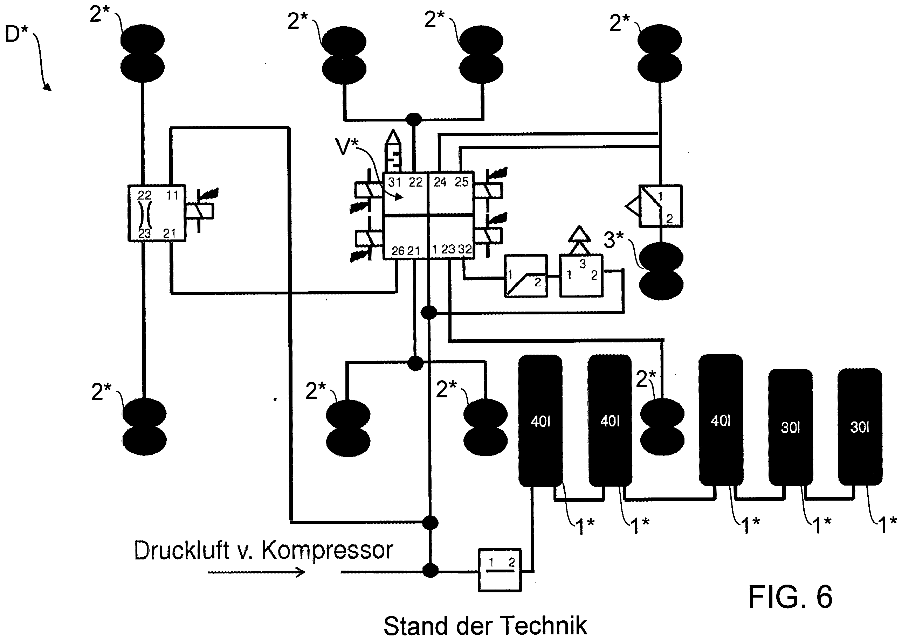

Figur 6 zeigt ein aus der Praxis vorbekanntes Druckluftsystem D*. Das Druckluftsystem D* umfasst mehrere in Reihe hintereinander geschaltete Druckluftbehälter, die einheitlich mit dem Bezugszeichen 1* versehen sind, mehrere Druckluftverbraucher, z. B. mehrere Luftfedern, die einheitlich mit dem Bezugszeichen 2* versehen sind, und eine Lifteinrichtung 3* zum Heben und Senken einer Fahrzeug-Achse.

Zwischen den Druckluftbehältern 1* und den Druckluftverbrauchern 2* und 3* ist ein Hauptverteiler V* angeordnet, um die Druckluft aus den Druckluftbehältern 1* an die einzelnen Druckluftverbraucher 2* und 3* zu verteilen. Die Druckluftbehälter 1* und der Hauptverteiler V* sind separate Bauteile und in Reihe verbaut, um die Funktionen Druckluftspeicherung und Druckluftverteilung bauteilseparat zu realisieren.

Ferner ist aus der US 2005/0168058 A1 ein Luftsystemmodul bekannt. Das Modul umfasst ein Reservoir mit mindestens drei Kammern zum Speichern von Druckluft für ein Fahrzeugluftzufuhrsystem und eine Befestigungsanordnung zum Stützen des Reservoirs an dem Fahrzeug. Die Kammern sind intern voneinander getrennt. Der Behälter enthält externe Verbindungen, wie Luftleitungen oder Rohrleitungen, zum Verbinden der drei Kammern.

Eine Aufgabe der Erfindung ist es, ein verbessertes und/oder alternatives Druckluftsystem zu schaffen, insbesondere ein Druckluftsystem, mittels dem Druckluftleitungswege zu Druckluftverbrauchern verkürzt und/oder eingespart werden können.

Diese Aufgabe kann mit den Merkmalen des Hauptanspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Druckluftsystem für ein Fahrzeug, insbesondere ein Nutzfahrzeug, z. B. einen Omnibus oder einen Lastkraftwagen. Das Druckluftsystem umfasst einen Druckluftbehälter und mehrere Druckluftverbraucher, die mittels des Druckluftbehälters mit Druckluft versorgbar sind.

Der Druckluftbehälter ist zweckmäßig zusätzlich zur Druckluftspeicherung ebenfalls zur Druckluftverteilung, insbesondere über eine Vielzahl an Druckluftausgangsöffnungen, an die mehreren Druckluftverbraucher ausgeführt ist, so dass die Funktionen Druckluftspeicherung und Druckluftverteilung bauteileinheitlich realisiert sind. Der Druckluftbehälter kann somit zweckmäßig als Commonrail-Druckluftbehälter bezeichnet werden.

Der vorzugsweise als Commonrail-Druckluftbehälter ausgeführte Druckluftbehälter verbindet somit die Funktionen der Druckluftspeicherung und der Druckluftverteilung zweckmäßig in einem Bauteil. Dadurch können z. B. Druckluftbehälter, Halterungen und Druckluft-Leitungswege eingespart werden, insbesondere aber der zuvor erwähnte Hauptverteiler des Stands der Technik. Darüber hinaus kann ein einheitlicher (z. B. zentraler) Einbauort für die Funktionen Druckluftspeicherung und Druckluftverteilung gewährleistet werden.

Dadurch, dass der Druckluftbehälter vorzugsweise länglich ausgeführt ist, kann er sich zweckmäßig beabstandet, aber entlang zumindest einiger Druckluftverbraucher erstrecken, so dass vorzugsweise die Druckluftwege vom Druckluftbehälter zu den einzelnen Druckluftverbrauchern relativ kurz gehalten werden können.

Der Druckluftbehälter weist vorzugsweise eine Vielzahl von Öffnungen, z. B. zumindest 10, zumindest 15 oder sogar zumindest 20 auf, so dass er flexibel eingesetzt werden kann. Dadurch können je nach Anwendungsbedarf verschiedene Druckluftverbraucher, zusätzliche Druckluftbehälter, Druckregler, Ventile, Rückschlagventile, Drosseln, etc. an die Öffnungen angeschlossen werden.

Der Druckluftbehälter kann insbesondere zum Verteilen der Druckluft an Druckluftverbraucher unterschiedlicher Fahrzeugachsen (z. B. einer vorderen und einer hinteren Fahrzeugachse) und/oder unterschiedlicher Druckluftverbraucher (z. B. Luftfedern und Lifteinrichtung, unterschiedliche Fahrzeug-Bremskreisläufe (z. B. für Fahrzeug-Vorderräder und Fahrzeug-Hinterräder), etc.) dienen, insbesondere unterschiedlicher Druckluftkreise, die vorzugsweise unabhängig voneinander betreibbar sind.

Z. B. kann Druckluft für die Bremsanlage über den Druckluftbehälter verteilt werden. Eine Fahrzeug-Bremsanlage kann z. B. auf zwei unterschiedliche Druckluftkreise aufgeteilt werden, die unabhängig voneinander sind.

Der Druckluftbehälter umfasst vorzugsweise mehrere Druckluftausgangsöffnungen, über die die Druckluftverteilung an die einzelnen Druckluftverbraucher erfolgt. Alternativ oder ergänzend kann der Druckluftbehälter mehrere Druckluftanschlussöffnungen aufweisen, mit denen mehrere Druckluftspeicher zur Erhöhung des Druckluftaufnahmevermögens des Druckluftbehälters mittelbar oder unmittelbar verbunden werden können.

Es ist möglich, dass mehrere Druckluftausgangsöffnungen in der Mantelfläche des Druckluftbehälters ausgebildet sind. Alternativ oder ergänzend kann zumindest eine Druckluftausgangsöffnung in der Stirnseite des Druckluftbehälters ausgebildet sein.

Es ist ebenfalls möglich, dass mehrere Druckluftanschlussöffnungen in der Mantelfläche des Druckluftbehälters ausgebildet sind und/oder zumindest eine Druckluftanschlussöffnung in der Stirnseite des Druckluftbehälters ausgebildet ist.

Druckluftanschlussöffnungen und Druckluftausgangsöffnungen sind vorzugsweise baulich gleich. Eine Öffnung (Anschluss) kann z. B. als Eingang oder als Ausgang dienen. Allein die Funktion bestimmt vorzugsweise, ob es ein Druckluftanschluss oder Druckluftausgang ist.

Es ist möglich, dass die Druckluftverbraucher mehrere Fahrzeug-Luftfedern umfassen und/oder zumindest eine zum Senken und Heben einer Fahrzeugachse ausgebildete Fahrzeug-Lifteinrichtung, z. B. einen Fahrzeug-Liftbalg. Alternativ oder ergänzend können die Druckluftverbraucher mehrere Bremseinrichtungen für Fahrzeugräder umfassen.

Eine Liftachse ist üblicherweise zweckmäßig mit Luftfedern versehen. Luftfedern ohne Liftachse sind zweckmäßig möglich.

Das Druckluftsystem kann z. B. ausgeführt sein, um mittels der Fahrzeug-Luftfedern das Fahrzeug-Fahr-Niveau trotz ausgeschalteter Fahrzeug-Antriebsmaschine (z. B. ein Verbrennungsmotor, etc.) zu heben und zu senken.

Die Fahrzeug-Lifteinrichtung kann z. B. Teil einer liftbaren Nachlaufachse sein.

Die Liftachse ist vorzugsweise eine Hinterachse, die komplett mit Rädern angehoben/gesenkt werden kann. Wenn der LKW z. B. unbeladen ist, benötigt er diese Achse üblicherweise nicht. Sie wird angehoben um Reibung/Verbrauch zu minimieren und den Reifenverschleiß zu senken. Die Liftachse beeinflusst üblicherweise das Fahrniveau nicht. Für das Fahrniveau sind insbesondere die Luftfedern zuständig.

Das Druckluftsystem umfasst folglich vorzugsweise eine liftbare Nachlaufachse und/oder ist zur Rampenanpassungen ausgeführt.

Es ist möglich, dass zwischen dem Druckluftbehälter (Commonrail-Druckluftbehälter) und den einzelnen Druckluftverbrauchern jeweils ein Ventil zur Steuerung der Druckluft ausgebildet ist. Das oder die Ventile können z. B. an den Druckluftbehälter anmontiert sein (z. B. an von der Mantelfläche des Druckluftbehälters abstehende Montageflansche) oder vom Druckluftbehälter räumlich beabstandet zwischen dem Druckluftbehälter und dem zugehörigen Druckluftverbraucher angeordnet sein, z. B. an den Druckluftverbraucher anmontiert sein.

Als Ventile können zweckmäßig Ventile mit Druckregler eingesetzt werden und alternativ oder ergänzend z. B. Rückschlagventile, Drosseln, etc. und andere zweckmäßige Steuer-/Regelelemente.

Zumindest eines der Ventile kann z. B. dazu dienen, um in einem gesperrten Zustand den Druck im zugehörigen Druckluftverbraucher konstant zu halten, um über einen Entlüfter den Druck im zugehörigen Druckluftverbraucher zu senken, und/oder um in einem zumindest teilweise geöffneten Zustand den Druck im zugehörigen Druckluftverbraucher mittels des Druckluftbehälters zu erhöhen.

Zumindest eines der Ventile dient vorzugsweise zur Steuerung der Druckluft an die Fahrzeug-Luftfeder und zur Steuerung der Druckluft an die zum Heben und Senken einer Fahrzeugachse ausgebildete Fahrzeug-Lifteinrichtung. Das hierzu verwendete Ventil kann z. B. ein 4/5-Wegeventil sein.

Das Druckluftsystem kann z. B. ein Drucksteuermittel aufweisen, um einen vordefinierten Druck im Druckluftbehälter zu gewährleisten.

Der Druckluftbehälter weist eine vorzugsweise längliche zylinderförmige Form auf und/oder ist vorzugsweise zumindest 1m oder zumindest 2m lang. Alternativ oder ergänzend erstreckt er sich vorzugsweise im Wesentlichen parallel zur Fahrzeug-Längsachse. Er kann z. B. einen Durchmesser von über 150 mm oder sogar größer oder gleich 200 mm aufweisen.

Der Druckluftbehälter ermöglicht insbesondere, dass auf einen Hauptverteiler verzichtet werden kann, der separat zum Druckluftbehälter und/oder in Reihe dahinter ausgebildet und zum Verteilen der Druckluft an Druckluftverbraucher unterschiedlicher Fahrzeugachsen ausgebildet ist.

Das Merkmal "Luft" ist im Rahmen der Erfindung breit auszulegen und kann z. B. auch ein anderes Gas als Luft umfassen.

Das Merkmal "Steuern" ist im Rahmen der Erfindung ebenfalls breit auszulegen und kann zweckmäßig z. B. auch ein Regeln umfassen.

Die Erfindung ist nicht auf ein Druckluftsystem beschränkt, sondern umfasst auch ein Fahrzeug, insbesondere ein Nutzfahrzeug, z. B. einen Omnibus oder einen Lastkraftwagen, mit einem Druckluftsystem wie hierin beschrieben.

Die vorstehend beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt ein Druckluftsystem gemäß einer Ausführungsform der Erfindung,
- Figur 2: zeigt eine perspektivische Ansicht eines Druckluftbehälters gemäß einer Ausführungsform der Erfindung,
- Figur 3: zeigt eine Seitenansicht des Druckluftbehälters der Figur 2,
- Figur 4: zeigt eine Draufsicht auf den Druckluftbehälter der Figuren 2 und 3,
- Figur 5: zeigt eine Frontalansicht des Druckluftbehälters der Figuren 2 bis 4, und
- Figur 6: zeigt ein Druckluftsystem des Stands der Technik.

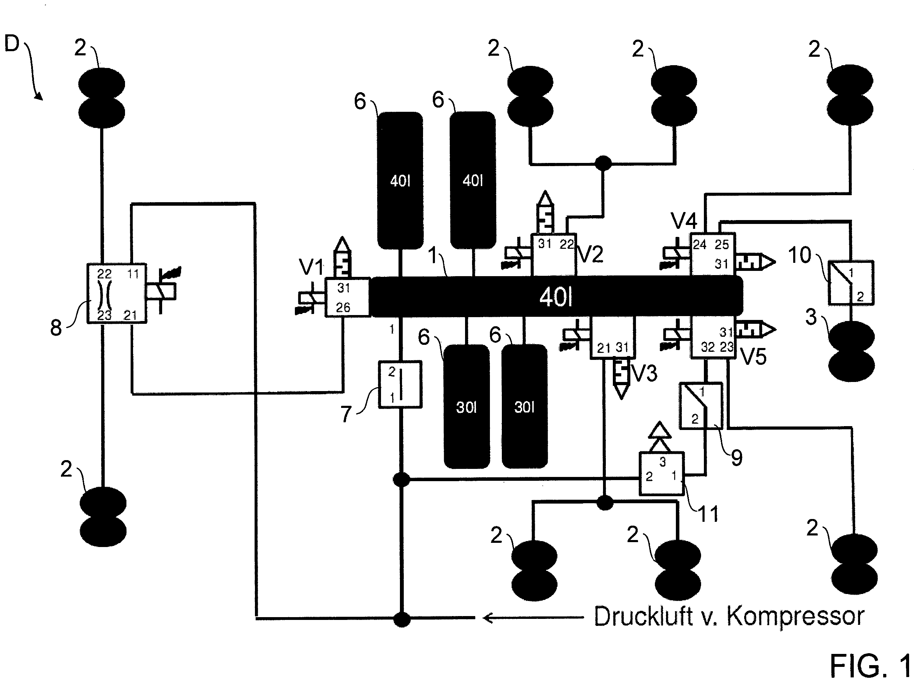

Figur 1 zeigt ein Druckluftsystem D für ein Fahrzeug, insbesondere ein Nutzfahrzeug. Das Druckluftsystem D umfasst eine Vielzahl an Druckluftverbrauchern 2, die einheitlich mit dem Bezugszeichen 2 versehen sind und als Luftfedern für eine vordere Fahrzeugachse und ein hinteres Fahrzeug-Doppelachs-/Zwillingsachs-Aggregat ausgeführt sind. Darüber hinaus umfasst das Druckluftsystem D einen als Fahrzeug-Lifteinrichtung 3, insbesondere als Liftbalg, ausgebildeten Druckluftverbraucher 3.

Die Druckluftverbraucher 2 und 3 können über einen Druckluftbehälter 1 mit Druckluft versorgt werden.

Der Druckluftbehälter 1 dient zusätzlich zur Druckluftspeicherung ebenfalls zur Druckluftverteilung an die Druckluftverbraucher 2 und 3, so dass er als Commonrail-Druckluftbehälter wirkt und die Funktionen Druckluftspeicherung und Druckluftverteilung bauteileinheitlich erfüllt.

Der Commonrail-Druckluftbehälter 1 ermöglicht es, dass zwischen dem Druckluftbehälter 1 und den einzelnen Druckluftverbrauchern 2 und 3 kein zum Druckluftbehälter 1 separater, insbesondere dem Druckluftbehälter 1 in Reihe nachgeschalteter Hauptverteiler V* erforderlich ist.

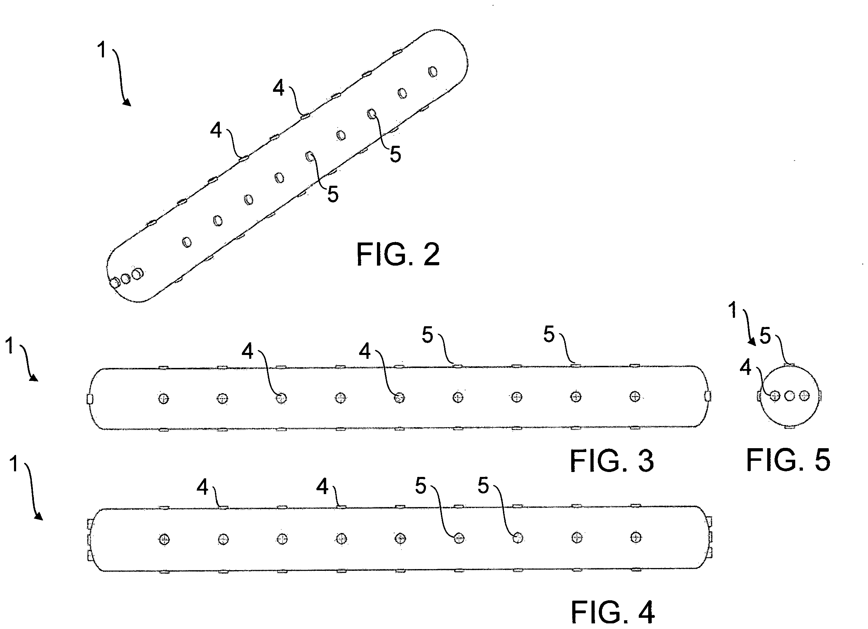

Der Druckluftbehälter 1 umfasst mehrere, der Übersichtlichkeit halber nur in den Figuren 2 bis 5 mit Bezugszeichen versehene Druckluftausgangsöffnungen 4, über die die Druckluftverteilung an die einzelnen Druckluftverbraucher 2 und 3 erfolgt.

Der Druckluftbehälter 1 umfasst darüber hinaus mehrere, der Übersichtlichkeit halber nur in den Figuren 2 bis 5 mit Bezugszeichen versehene Druckluftanschlussöffnungen 5, mit denen Druckluftspeicher 6 zur Erhöhung des Druckluftaufnahmevermögens des Druckluftbehälters 1 zweckmäßig demontierbar verbindbar sind.

Die Druckluftanschlüsse und Druckluftausgänge sind zweckmäßig baulich gleich. Ein Anschluss kann als Eingang oder als Ausgang dienen. Allein die Funktion bestimmt, ob es Druckluftanschlüsse oder Druckluftausgänge sind.

Zwischen dem Druckluftbehälter 1 und den zwei in Figur 1 linken Luftfedern 2 ist ein Ventil V1 angeordnet. Die Luftfedern 2 sind einer vorderen Fahrzeugachse zugeordnet. Das Ventil V1 kann z. B. als 2/2-Wegeventil ausgeführt sein. Es kann vorzugsweise zwei Schaltstellungen aufweisen, z. B. um in einem gesperrten Zustand den Druck in den Luftfedern 2 konstant zu halten und um über eine Entlüftung den Druck in den Luftfedern 2 zu senken.

Zwischen dem Druckluftbehälter 1 und den zwei in Figur 1 oberen, mittleren Luftfedern 2 ist ein Ventil V2 angeordnet.. Die Luftfedern 2 sind einer mittleren Fahrzeugachse, z. B. einer vorderen Achse eines Doppelachs-/Zwillingsachs-Aggregats zugeordnet. Das Ventil V2 kann z. B. als 3/3-Wegeventil ausgeführt sein und z. B. drei Schaltstellungen aufweisen. So kann es z. B. in einem gesperrten Zustand den Druck in den zwei Luftfedern 2 konstant halten, über eine Entlüftung den Druck in den zwei Luftfedern 2 senken und in einem zumindest teilweise geöffneten Zustand den Druck mittels des Druckluftbehälters 1 in den zwei Luftfedern 2 erhöhen.

Zwischen dem Druckluftbehälter 1 und den zwei in Figur 1 mittleren, unteren Luftfedern 2 ist ein Ventil V3 angeordnet. Die Luftfedern 2 sind ebenfalls der mittleren Fahrzeugachse zugeordnet. Das Ventil V3 kann analog dem Ventil V2 ausgeführt sein.

Zwischen dem Druckluftbehälter 1 und der in der Figur 1 hinteren, oberen Luftfeder 2 und der Lifteinrichtung 3 ist ein Ventil V4 angeordnet. Die Luftfeder 2 und die Lifteinrichtung 3 sind der Liftachse zugeordnet. Das Ventil V4 kann z. B. als 4/5-Wegeventil ausgeführt sein und z. B. fünf Schaltstellungen aufweisen. So kann es z. B. in einem gesperrten Zustand den Druck in der Luftfeder 2 und der Lifteinrichtung 3 konstant halten, über eine Entlüftung den Druck in der Luftfeder 2 oder der Lifteinrichtung 3 senken und in einem zumindest teilweise geöffneten Zustand den Druck der Luftfeder 2 oder der Lifteinrichtung 3 mittels des Druckluftbehälters 1 erhöhen.

Zwischen dem Druckluftbehälter 1 und der in Figur 1 hinteren, unteren Luftfeder 2 ist ein Ventil V5 angeordnet. Die Luftfeder 2 ist der hinteren Fahrzeugachse zugeordnet. Das Ventil V5 kann z. B. ein 4/3-Wegeventil sein und z. B. drei Schaltstellungen aufweisen. So kann es z. B. in einem gesperrten Zustand den Druck in der Luftfeder 2 konstant halten, über eine Entlüftung den Druck in der Luftfeder 2 senken und in einem zumindest teilweise geöffneten Zustand den Druck in der Luftfeder 2 mittels des Druckluftbehälters 1 erhöhen. Zudem kann ein Anschluss zur Druckbegrenzung des Druckluftsystems D dienen.

Das mit dem Bezugszeichen 7 versehene Ventil ist zweckmäßig ein Überströmventil zur Restdruckerhaltung, so dass, wenn die Kompressorseite drucklos ist, das Überströmventil 7 sperrt und die Drucklosigkeit im Druckluftsystem D, insbesondere in den Druckluftverbrauchern 2 und 3, verhindert.

Das mit dem Bezugszeichen 8 versehene Ventil ist z. B. ein 4/2 Wegeventil. Das Ventil 8 kann in einem gesperrten Zustand den Druck in den vorderen Luftfedern 2 konstant halten, über eine Entlüftung den Druck senken und in einem zumindest teilweise geöffneten Zustand den Druck in den Luftfedern 2 mittels des Druckluftbehälters 1 erhöhen.

Die Ventile 9 und 10 können als Druckbegrenzungsventile ausgeführt sein.

Das Ventil 11 kann als Schnelllöseventil mit Luftfilter ausgeführt sein.

Zu erwähnen ist noch, dass das Druckluftsystem D insbesondere für ein Fahrzeug mit liftbarer Nachlaufachse und sogenannter Rampenanpassung ausgeführt ist, wonach das Fahrzeug auch bei ausgeschaltetem Antriebsmotor, insbesondere ausgeschalteter Verbrennungskraftmaschine, sein Fahrniveau verändern kann. So kann z. B. bei der Beladung des Fahrzeugs an einer Rampe sich das Fahrniveau aufgrund des Mehrgewichts durch die Beladung senken. Demzufolge muss der Druck in der Lifteinrichtung 3 erhöht werden, damit das Fahrzeug auf das angemessene Fahrniveau eingestellt werden kann.

Die Figuren 2 bis 5 zeigen verschiedene Ansichten eines Druckluftbehälters 1 gemäß einer Ausführungsform der Erfindung, der so z. B. in das Druckluftsystem D der Figur 1 integriert werden kann.

In den Figuren 2 bis 5 ist eine Vielzahl an Druckluftöffnungen zu sehen, von denen der Übersichtlichkeit halber nur einige mit den Bezugszeichen 4 und 5 versehen sind (Druckluftausgangsöffnungen 4 zur Druckluftverteilung an die einzelnen Druckluftverbraucher 2 und 3 und Druckluftanschlussöffnungen 5 zum mittelbaren oder unmittelbaren Verbinden mit den zusätzlichen Druckluftspeichern 6 zur Erhöhung des Druckluftaufnahmevermögens des Druckluftbehälters 1).

Die Figuren 2 bis 5 zeigen, dass die Druckluftausgangsöffnungen 4 und die Druckluftanschlussöffnungen 5 in der Mantelfläche des Druckluftbehälters 1 und in der Stirnseite des Druckluftbehälters 1 ausgebildet sein können.

Der Druckluftbehälter 1 ist länglich, vorzugsweise zylinderförmig, insbesondere kreiszylinderförmig, ausgeführt und kann eine Länge von zumindest 1m oder sogar von zumindest 2m aufweisen und sich vorzugsweise parallel zur Längsachse des Nutzfahrzeugs erstrecken. Somit können z. B. Leitungswege hin zu den Druckluftverbrauchern 2 und 3 verkürzt oder vermieden werden.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den durch die Ansprüche definierten Schutzbereich fallen.

### Bezugszeichenliste

- 1: Druckluftbehälter, insbesondere Commonrail-Druckluftbehälter
- 2: Druckluftverbraucher, insbesondere Luftfeder
- 3: Druckluftverbraucher, insbesondere Lifteinrichtung
- 4: Druckluftausgangsöffnungen zur Druckluftverteilung an die einzelnen Druckluftverbraucher
- 5: Druckluftanschlussöffnungen zur mittelbaren oder unmittelbaren Verbindung mit Druckluftspeichern zur Erhöhung des Druckluftaufnahmevermögens des Druckluftbehälters
- 6: Zusätzliche Druckluftspeicher
- 7: Ventil
- 8: Ventil
- 9: Ventil
- 10: Ventil
- 11: Ventil
- V1: Ventil
- V2: Ventil
- V3: Ventil
- V4: Ventil
- V5: Ventil
- D: Druckluftsystem

## Patentansprüche

1. Druckluftsystem (D) für ein Fahrzeug, mit einem Druckluftbehälter (1) und mehreren Druckluftverbrauchern (2, 3), die mittels des Druckluftbehälters (1) mit Druckluft versorgbar sind, wobei der Druckluftbehälter (1) zusätzlich zur Druckluftspeicherung zur Druckluftverteilung an die mehreren Druckluftverbraucher (2, 3) dient, vorzugsweise über mehrere Druckluftausgangsöffnungen (4),
**dadurch gekennzeichnet, dass**
die Funktionen Druckluftspeicherung und Druckluftverteilung bauteileinheitlich realisiert sind.

2. Druckluftsystem (D) nach Anspruch 1, wobei der Druckluftbehälter (1) zum Verteilen der Druckluft an Druckluftverbraucher (2) unterschiedlicher Fahrzeugachsen und/oder unterschiedlicher Druckluftverbraucher (2, 3) dient.

3. Druckluftsystem (D) nach Anspruch 1 oder 2, wobei Druckluftausgangsöffnungen (4) in der Mantelfläche des Druckluftbehälters (1) ausgebildet sind und/oder zumindest eine Druckluftausgangsöffnung (4) in der Stirnseite des Druckluftbehälters (1) ausgebildet ist.

4. Druckluftsystem (D) nach einem der vorhergehenden Ansprüche, wobei der Druckluftbehälter (1) mehrere Druckluftanschlussöffnungen (5) umfasst, mit denen Druckluftspeicher (6) zur Erhöhung des Druckluftaufnahmevermögens des Druckluftbehälters (1) verbindbar sind.

5. Druckluftsystem (D) nach Anspruch 4, wobei die Druckluftanschlussöffnungen (5) in der Mantelfläche des Druckluftbehälters (1) ausgebildet sind und/oder zumindest eine Druckluftanschlussöffnung (5) in der Stirnseite des Druckluftbehälters (1) ausgebildet ist.

6. Druckluftsystem (D) nach einem der vorhergehenden Ansprüche, wobei die Druckluftverbraucher (2, 3) mehrere Fahrzeug-Luftfedern (2) und/oder zumindest eine zum Senken und Heben einer Fahrzeug-Achse ausgebildete Fahrzeug-Lifteinrichtung (3) umfassen.

7. Druckluftsystem (D) nach Anspruch 6, wobei das Druckluftsystem (D) ausgeführt ist, um mittels der Fahrzeug-Luftfedern (2) das Fahrzeug-Fahr-Niveau trotz ausgeschalteter Fahrzeug-Antriebsmaschine zu heben und zu senken.

8. Druckluftsystem (D) nach Anspruch 6 oder 7, wobei die Fahrzeug-Lifteinrichtung (3) Teil einer liftbaren Nachlaufachse ist.

9. Druckluftsystem (D) nach einem der vorhergehenden Ansprüche, wobei die Druckluftverbraucher Bremseinrichtungen für vorzugsweise vordere und hintere Fahrzeug-Räder umfassen.

10. Druckluftsystem (D) nach einem der vorhergehenden Ansprüche, wobei zwischen dem Druckluftbehälter (1) und den einzelnen Druckluftverbrauchern (2, 3) jeweils ein Ventil (V1, V2, V3, V4, V5) zur Steuerung der Druckluft ausgebildet ist.

11. Druckluftsystem (D) nach Anspruch 10, wobei zumindest eines der Ventile (V1, V2, V3, V4, V5) dazu dient, um in einem gesperrten Zustand den Druck im zugehörigen Druckluftverbraucher (2, 3) konstant zu halten, um über eine Entlüftung den Druck im zugehörigen Druckluftverbraucher (2, 3) zu senken, und/oder um in einem zumindest teilweise geöffneten Zustand den Druck im zugehörigen Druckluftverbraucher (2, 3) mittels des Druckluftbehälters (1) zu erhöhen.

12. Druckluftsystem (D) nach Anspruch 10 oder 11, wobei zumindest eines der Ventile (V3) zur Steuerung der Druckluft an eine Fahrzeug-Luftfeder (2) und eine zum Heben und Senken einer Fahrzeug-Achse ausgebildete Fahrzeug-Lifteinrichtung (3) dient.

13. Druckluftsystem (D) nach einem der vorhergehenden Ansprüche, wobei das Druckluftsystem (D) ein Drucksteuermittel (7) aufweist, um einen vordefinierten Druck im Druckluftbehälter (1) zu gewährleisten.

14. Druckluftsystem (D) nach einem der vorhergehenden Ansprüche, wobei der Druckluftbehälter (1) eine längliche zylinderförmige Form aufweist und vorzugsweise zumindest 1m oder zumindest 2m lang ist und/oder sich im Wesentlichen parallel zur Fahrzeug-Längsachse erstreckt.

15. Druckluftsystem (D) nach einem der vorhergehenden Ansprüche, wobei das Druckluftsystem (D) keinen Hauptverteiler (V*) aufweist, der separat zum Druckluftbehälter (1) und vorzugsweise in Reihe dahinter ausgebildet und zum Verteilen der Druckluft an Druckluftverbraucher (2*) unterschiedlicher Fahrzeugachsen ausgebildet ist.

16. Fahrzeug, insbesondere Nutzfahrzeug, mit einem Druckluftsystem (D) nach einem der vorhergehenden Ansprüche.

## Claims

1. A compressed air system (D) for a vehicle, with a compressed air tank (1) and a plurality of compressed air consumers (2, 3) which can be supplied with compressed air by means of the compressed air tank (1), the compressed air tank (1) additionally serving for the storage of compressed air for the distribution of compressed air to the plurality of compressed air consumers (2, 3), preferably via a plurality of compressed air outlet openings (4), **characterized in that** the functions of storage of compressed air and distribution of compressed air are realised in one component.

2. The compressed air system (D) according to Claim 1, the compressed air tank (1) serving for the distribution of the compressed air to compressed air consumers (2) of different vehicle axles and/or different compressed air consumers (2, 3).

3. The compressed air system (D) according to Claim 1 or 2, compressed air outlet openings (4) being configured in the shell surface of the compressed air tank (1) and/or at least one compressed air outlet opening (4) being configured in the end side of the compressed air tank (1) .

4. The compressed air system (D) according to one of the preceding claims, the compressed air tank (1) comprising a plurality of compressed air connector openings (5), to which compressed air stores (6) can be connected in order to increase the compressed air capacity of the compressed air tank (1).

5. The compressed air system (D) according to Claim 4, the compressed air connector openings (5) being configured in the shell surface of the compressed air tank (1) and/or at least one compressed air connector opening (5) being configured in the end side of the compressed air tank (1).

6. The compressed air system (D) according to one of the preceding claims, the compressed air consumers (2, 3) comprising a plurality of vehicle air springs (2) and/or at least one vehicle lift device (3) which is configured for lowering and raising a vehicle axle.

7. The compressed air system (D) according to Claim 6, the compressed air system (D) being configured to raise and to lower the vehicle ride height by means of the vehicle air springs (2) despite the vehicle drive unit being switched off.

8. The compressed air system (D) according to Claim 6 or 7, the vehicle lift device (3) being part of a trailing axle which can be lifted.

9. The compressed air system (D) according to one of the preceding claims, the compressed air consumers comprising brake devices for preferably front and rear vehicle wheels.

10. The compressed air system (D) according to one of the preceding claims, in each case one valve (V1, V2, V3, V4, V5) for controlling the compressed air being configured between the compressed air tank (1) and the individual compressed air consumers (2, 3).

11. The compressed air system (D) according to Claim 10, at least one of the valves (V1, V2, V3, V4, V5) serving, in a closed state, to keep the pressure in the associated compressed air consumer (2, 3) constant, in order to lower the pressure in the associated compressed air consumer (2, 3) via a ventilation means, and/or, in an at least partially open state, in order to increase the pressure in the associated compressed air consumer (2, 3) by means of the compressed air tank (1).

12. The compressed air system (D) according to Claim 10 or 11, at least one of the valves (V3) serving to control the compressed air to a vehicle air spring (2) and a vehicle lift device (3) which is configured to raise and lower a vehicle axle.

13. The compressed air system (D) according to one of the preceding claims, the compressed air system (D) having a pressure control means (7), in order to ensure a predefined pressure in the compressed air tank (1).

14. The compressed air system (D) according to one of the preceding claims, the compressed air tank (1) having an elongate cylindrical shape and preferably being at least 1 m or at least 2 m in length and/or extending substantially parallel to the vehicle longitudinal axis.

15. The compressed air system (D) according to one of the preceding claims, the compressed air system (D) not having a main distributor (V*) which is configured separately from the compressed air tank (1) and preferably in series behind it, and is configured to distribute the compressed air to compressed air consumers (2*) of different vehicle axles.

16. A vehicle, in particular a utility vehicle, with a compressed air system (D) according to one of the preceding claims.

## Revendications

1. Système d'air comprimé (D) pour un véhicule, comprenant un réservoir d'air comprimé (1) et plusieurs consommateurs d'air comprimé (2, 3) qui peuvent être alimentés en air comprimé au moyen du réservoir d'air comprimé (1), le réservoir d'air comprimé (1) servant en plus du stockage d'air comprimé à la distribution d'air comprimé aux plusieurs consommateurs d'air comprimé (2, 3), de préférence par l'intermédiaire de plusieurs orifices de sortie d'air comprimé (4),
**caractérisé en ce que** les fonctions de stockage d'air comprimé et de distribution d'air comprimé sont réalisées en composants uniformes.

2. Système d'air comprimé (D) selon la revendication 1, dans lequel le réservoir d'air comprimé (1) sert à distribuer l'air comprimé à des consommateurs d'air comprimé (2) de différents essieux de véhicule et/ou à différents consommateurs d'air comprimé (2, 3).

3. Système d'air comprimé (D) selon la revendication 1 ou 2, dans lequel des orifices de sortie d'air comprimé (4) sont réalisés dans la surface latérale du réservoir d'air comprimé (1) et/ou au moins un orifice de sortie d'air comprimé (4) est réalisé dans la face frontale du réservoir d'air comprimé (1).

4. Système d'air comprimé (D) selon l'une quelconque des revendications précédentes, dans lequel le réservoir d'air comprimé (1) comprend plusieurs orifices de raccordement d'air comprimé (5) auxquels des accumulateurs d'air comprimé (6) peuvent être reliés pour augmenter la capacité de réception d'air comprimé du réservoir d'air comprimé (1).

5. Système d'air comprimé (D) selon la revendication 4, dans lequel les orifices de raccordement d'air comprimé (5) sont réalisés dans la surface latérale du réservoir d'air comprimé (1) et/ou au moins un orifice de raccordement d'air comprimé (5) est réalisé dans la face frontale du réservoir d'air comprimé (1).

6. Système d'air comprimé (D) selon l'une quelconque des revendications précédentes, dans lequel les consommateurs d'air comprimé (2, 3) comprennent plusieurs amortisseurs pneumatiques de véhicule (2) et/ou au moins un dispositif de levage d'essieu de véhicule (3) réalisé pour descendre et monter un essieu de véhicule.

7. Système d'air comprimé (D) selon la revendication 6, dans lequel le système d'air comprimé (D) est réalisé pour monter ou descendre le niveau de conduite de véhicule au moyen des amortisseurs pneumatiques de véhicule (2), même si une machine d'entraînement de véhicule est coupée.

8. Système d'air comprimé (D) selon la revendication 6 ou 7, dans lequel le dispositif de levage d'essieu de véhicule (3) fait partie d'un essieu entraîné pouvant être relevé.

9. Système d'air comprimé (D) selon l'une quelconque des revendications précédentes, dans lequel les consommateurs d'air comprimé comprennent des dispositifs de freinage de préférence pour des roues de véhicule avant et arrière.

10. Système d'air comprimé (D) selon l'une quelconque des revendications précédentes, dans lequel entre le réservoir d'air comprimé (1) et les consommateurs d'air comprimé (2, 3) individuels, respectivement une vanne (V1, V2, V3, V4, V5) est réalisée pour commander l'air comprimé.

11. Système d'air comprimé (D) selon la revendication 10, dans lequel au moins l'une des vannes (V1, V2, V3, V4, V5) sert à l'état bloqué à maintenir constante la pression dans le consommateur d'air comprimé (2, 3) associé pour baisser la pression dans le consommateur d'air comprimé (2, 3) associé par un dispositif d'aération, et/ou dans un état au moins partiellement ouvert, pour augmenter la pression dans le consommateur d'air comprimé (2, 3) associé au moyen du réservoir d'air comprimé (1).

12. Système d'air comprimé (D) selon la revendication 10 ou 11, dans lequel au moins l'une des vannes (V3) sert à commander l'air comprimé destiné à un amortisseur pneumatique de véhicule (2) et à un dispositif de levage d'essieu de véhicule (3) réalisé pour monter et descendre un essieu de véhicule.

13. Système d'air comprimé (D) selon l'une quelconque des revendications précédentes, dans lequel le système d'air comprimé (D) présente un moyen de commande de pression (7) pour garantir une pression prédéfinie dans le réservoir d'air comprimé (1).

14. Système d'air comprimé (D) selon l'une quelconque des revendications précédentes, dans lequel le réservoir d'air comprimé (1) présente une forme cylindrique allongée et présente de préférence une longueur d'au moins 1 m ou d'au moins 2 m et/ou s'étend substantiellement en parallèle à l'axe longitudinal de véhicule.

15. Système d'air comprimé (D) selon l'une quelconque des revendications précédentes, dans lequel le système d'air comprimé (D) ne présente pas de distributeur principal (V*) qui est réalisé séparément par rapport au réservoir d'air comprimé (1) et de préférence en série après celui-ci et qui est réalisé pour répartir l'air comprimé à des consommateurs d'air comprimé (2*) de différents essieux de véhicule.

16. Véhicule, en particulier véhicule utilitaire, comprenant un système d'air comprimé (D) selon l'une quelconque des revendications précédentes.
